# DEMANDE DE BREVET EUROPEEN

(11) **EP 0 713 742 A1**
(43) Date de publication de la demande: **29.05.1996**
(21) Numéro de dépôt: 95402604.3
(22) Date de dépôt: 20.11.1995
(51) Int. Cl.: B23K 1/08

(54) **Dispositif d'injection d'un gaz neutre, notamment de l'azote, pour machine de soudure à la vague et machine de soudure à la vague munie d'un tel système**

(30) Priorité: 23.11.1994 FR 9414019
(71) Demandeur: ELECTROVAGUE, F-92130 Issy-les-Moulineaux (FR)
(72) Inventeur: Tissier, René, F-92110 Clichy (FR)
(74) Mandataire: Lepercque, Jean

(57) **Abrégé**

Selon l'invention, on injecte de l'azote (N₂) dans une zone restreinte (Z_{S}) située en dessous de la carte de circuits imprimés à souder (5). Une conduite (35), baignant dans la soudure en fusion (30), insuffle l'azote (N₂) préchauffé dans cette zone (Z_{S}). Cette injection est pilotée par un capot (33), flottant sur la vague (Vₐ).

Dans un mode de réalisation préféré, l'azote (N₂) refroidit le corps de pompe avant d'être préchauffé.

## Description

La présente invention concerne un dispositif d'injection d'un gaz neutre, notamment de l'azote, pour machine de soudure à la vague.

Elle concerne également une machine munie d'un tel disppositif.

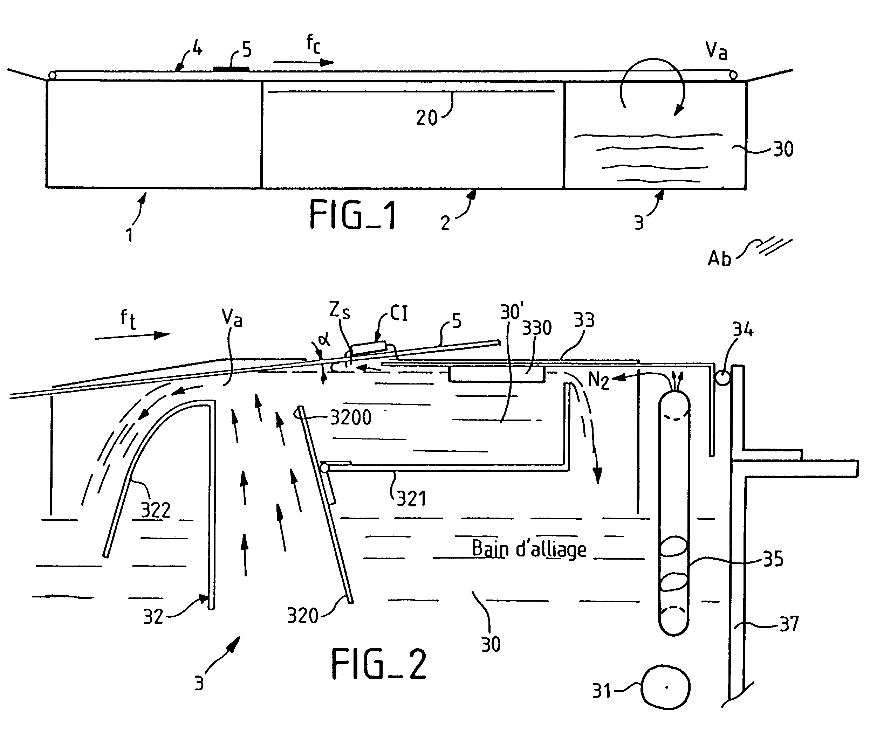

Des machines de soudure à la vague sont bien connues. Elles comportent généralement trois sous-ensembles fonctionnels, comme illustré schématiquement par la figure 1 annexée à la description de la présente demande de brevet. Les cartes de circuits imprimés 5, munies de composants à souder, sont entraînées par un convoyeur 4 et traversent (flèche fₜ), successivement, un premier sous-ensemble 1 dit "fluxeur" soumettant la face à souder à un produit chimique approprié, un deuxième sous-ensemble de chauffage 2, généralement à infrarouge, et un troisième sous-ensemble 3, de soudure à la vague proprement dit. Ce dernier contient le bain d'alliage 30 servant à la soudure, par exemple un alliage étain-plomb porté à une température de l'ordre de 250 °C. Ce bain 30 est mis en mouvement sous la forme d'une vague Vₐ, à l'aide de moyens classiques (non représentés sur la figure 1) qui seront détaillés ci-après.

Du fait de la température élevée et de la haute réactivité à l'oxygène contenue dans l'air des produits utilisés, en l'absence de dispositions appropriées, on constate une oxydation quasi-instantanée de la soudure déposée autour des connexions des composants implantés sur la carte de circuit imprimés 5. En outre, les zones de la machine de soudure à la vague elles-mêmes, exposées à l'air, sont également sujettes à une oxydation rapide. Ce processus implique une maintenance contraignante et coûteuse.

Pour pallier à ce problème, il est connu d'isoler la zone de soudure à la vague 3 de l'air ambiant par un capot ou un organe similaire et de remplir le volume entre ce capot et le bain de soudure par un gaz neutre, typiquement de l'azote. Cependant, il n'est pas possible de rendre complétement étanche l'enceinte comprise entre le capot et le bain de soudure, puisque les plaquettes de circuits imprimés sont entraînées par le convoyeur 4 et sont en mouvement continu. Il est donc nécessaire de renouveler constamment l'azote. Or, dans une installation industrielle, les dimensions typiques d'une machine de soudure à la vague sont de l'ordre de un à plusieurs mètres, ce qui implique des réserves d'azote de plusieurs m³, avec les problèmes liés à l'environnement que cela entraîne.

Enfin, si ces dispositions peuvent être mises en oeuvre dès l'origine (au stade de la conception et de la fabrication), il n'est pas économiquement viable de les intégrer sur une machine de conception ancienne.

L'invention vise à pallier les inconvénients des machines de soudure à la vague de l'art connu, et dont certaines viennent d'être rappelées.

Elle vise de plus, et ce simultanément, à éviter l'oxydation au niveau des zones de soudure, à augmenter la tension superficielle et à éviter les phénomènes dits "de pontage".

L'invention utilise, comme certaines installations de l'art connu, une "immersion" d'azote, mais de façon très localisée de manière à minimiser la consommation de ce gaz. Enfin, selon un aspect important de l'invention, elle tire parti du fait que l'alliage constituant le matériau de soudure est chauffé pour, également, préchauffer l'azote en le faisant circuler, avant injection sur une zone limitée du composant à souder, dans le mélange en fusion.

En outre, les machines de soudure à la vague sont pourvues d'un moteur entrînant une pompe créant la vague de soudure. En général, cette pompe est constituée par une vis d'Archimède pompant le matériau en fusion. Dans une variante préférée de l'invention, l'azote, avant préchauffage, circule autour du moteur précité d'entraînement du mélange, de manière à refroidir celui-ci.

L'invention a donc pour objet un dispositif d'injection d'un gaz neutre pour machine de soudure à la vague du type comprenant au moins un convoyeur d'éléments à souder et un bac contenant un alliage de matériaux de soudure en fusion, des moyens de production de la vague mettant ledit alliage en mouvement et une buse conduisant cet alliage vers ledit élément à souder et le projetant sous la forme d'une vague, ladite buse comportant un réservoir supérieur, dans lequel se déverse au moins une partie du matériau constituant ladite vague, le dispositif comprenant en outre un élément déflecteur, caractérisé en ce que ledit élément déflecteur flotte sur le matériau contenu dans le réservoir supérieur, de manière à ce qu'il suive le niveau atteint par la vague, et en ce qu'il est prévu des moyens pour injecter ledit gaz neutre entre l'élément déflecteur flottant et le matériau contenu dans le réservoir supérieur, de manière à insuffler ledit gaz neutre sur une zone prédéterminée dudit élément à souder.

L'invention a encore pour objet une machine de soudure à la vague mettant en oeuvre un tel dispositif.
La figure 1 illustre schématiquement les différents sous-ensembles d'une machine de soudure à la vague ;
La figure 2 illustre schématiquement, en coupe longitudinale, un dispositif d'injection d'azote pour machine de soudure à la vague conforme à l'invention ;
La figure 3 illustre schématiquement, en coupe latérale, un dispositif d'injection d'azote pour machine de soudure à la vague conforme à un mode de réalisation préféré de l'invention.

La figure 2 illustre, schématiquement, en coupe partielle longitudinale, un dispositif d'injection d'azote pour machine de soudure à la vague conforme dispositif d'injection d'azote pour machine de soudure à la vague conforme à l'invention. Il reprend la plupart des éléments communs aux dispositifs de l'art connu et qui vont être brièvement rappelés. Le convoyeur 4 (figure 1) entraîne une carte de circuits imprimés 5 (ou de façon plus générale un élément à souder) et la présente dans la zone de soudage 3, avantageusement, sous une inclinaison positive α (c'est-à-dire dont l'avant est plus élevé que l'arrière, dans le sens du transport : flèche fₜ) de quelques degrés par rapport à l'horizontale, comme illustré par la figure 2. Le bain d'alliage de matériaux 30 utilisé pour la soudure est porté à une température typique de 250 °C par une résistance immergée 31. Ce bain 30 est contenu dans le fond d'une cuve 37. Le sous-ensemble de soudure 3 comporte une buse 32 munie d'un canal d'injection 320 vertical comportant une ouverture 3200, sensiblement horizontale et dirigée vers le dessous de la carte de circuit imprimé 5, c'est-à-dire vers la région de cette carte comportant des connexions de composants CI à souder sur des pistes métallisées (non représentées). L'alliage en fusion 30 est entraîné par une pompe (non représentée sur la figure 2) sous la forme d'une vague Vₐ de soudure émergeant de la buse 32. La buse comporte également un réservoir supérieur 321 rempli par ladite vague Vₐ de soudure (sur la partie droite de la figure 2, dans l'exemple illustré). Enfin, elle comporte un déversoir 322 de soudure (sur la partie gauche de la figure 2, dans l'exemple illustré), constitué d'une paroi en pente douce, permettant un recyclage du surplus de soudure 30 vers le fond du bac 37. Le surplus de soudure peut également être recyclé par déversement direct au-dessus de la paroi du réservoir supérieur 321.

Selon une caractéristique principale de l'invention, le sous-ensemble de soudure 3 comprend également un organe flottant 33. Ce dernier "flotte" à l'aide d'un caisson 330 sur le liquide en fusion 30' contenu dans le réservoir supérieur 321. Il constitue un capot isolant l'alliage en fusion 30-30' de l'air ambiant A_{b}, c'est-à-dire du milieu oxydant. Un joint 34 permet de réaliser cette isolation. Par cette disposition importante de l'invention, le capot 33 suit en permanence le niveau de la vague Vₐ.

Selon une caractéristique également importante de l'invention, un gaz neutre, de préférence de l'azote, est insufflé dans une zone restreinte Z_{S}, directement sous un élément CI en cours de soudage, et seulement dans cette zone restreinte Z_{S}.

Pour ce faire, l'azote N₂ est amené, par un conduit 35, dans une zone située entre le capot flottant 33 et le bain inférieur 30 d'alliage en fusion. Le jet de gaz suit ensuite le conduit constitué de fait par l'espace laissé libre entre ce capot 33 et la surface du bain supérieur 30' d'alliage en fusion, pour finalement être injecté dans la zone restreinte Z_{S} précitée. Le capot flottant 33 sert de déflecteur et de guide. Le volume libre entre celui-ci et le haut de la vague est sensiblement constant du fait de la flottaison.

On constate aisément que cette disposition permet une grande efficacité, puisque seule, en réalité, cette zone nécessite d'être isolée de l'air ambiant A_{b}. Ensuite, la plaquette de circuit imprimé 5, étant entraînée par le convoyeur 4 (figure 1), la soudure se refroidit très vite et la zone venant d'être soudée ne nécessite plus d'être protégée. Il est clair également que le volume devant être protégé étant très peu important, la quantité de gaz à mettre en oeuvre est faible. Typiquement, il est nécessaire d'assurer un débit de 50 à 100 l/heure.

Comme il a été indiqué, la carte de circuit imprimé 5 est présentée généralement sous un angle α de faible amplitude, typiquement compris dans une gamme comprise entre 4 et 10 degrés . De ce fait, la zone Z_{S}, et le volume de gaz associé, peut être déterminée avec précision, puisque ce dernier est confiné dans la région strictement délimitée par la surface supérieure de la vague Vₐ, la face de dessous de la carte 5 et le bord (gauche sur la figure 2) du capot flottant 33.

En outre, selon un autre aspect important de l'invention, le conduit 35 d'amenée de l'azote N₂ est constitué avantageusement par un serpentin baignant dans le mélange en fusion 30. De ce fait, il est préchauffé à une température de l'ordre de 200 °C, par échange thermique entre ce conduit 35 et l'alliage en fusion 30, ce, dans l'hypothèse où l'alliage précité est porté à une température de 250 °C. La température précise de l'azote N₂ dépend aussi d'autres facteurs : longueur du tube 35, surface d'échange, débit, etc.

Cette disposition permet d'augmenter l'efficacité du procédé, car le gaz insufflé est à une température proche du matériau de soudure apporté sur les connexions du circuit CI à souder et des pistes conductrices (non représentées) tracées sur le dessous de la carte de circuits imprimés. En conséquence, les contraintes thermiques induites sont moindres.

Il est encore possible d'améliorer le dispositif selon l'invention. En effet, avant préchauffage, l'azote est normalement amené à température ambiante dans la machine de soudure à la vague. Il est donc possible de l'utiliser à d'autres fins que celles qui viennent d'être rappelées. Comme il a été rappelé, les machines de soudure à la vague sont munies généralement d'une pompe entraînée par un moteur. Ce moteur se trouve le plus souvent à proximité immédiate du sous-ensemble de soudage 3, donc d'une zone portée à une température élevée.

Dans un mode de réalisation préféré de l'invention, on utilise également le flux entrant d'azote, à faible température, pour refroidir le corps de pompe.

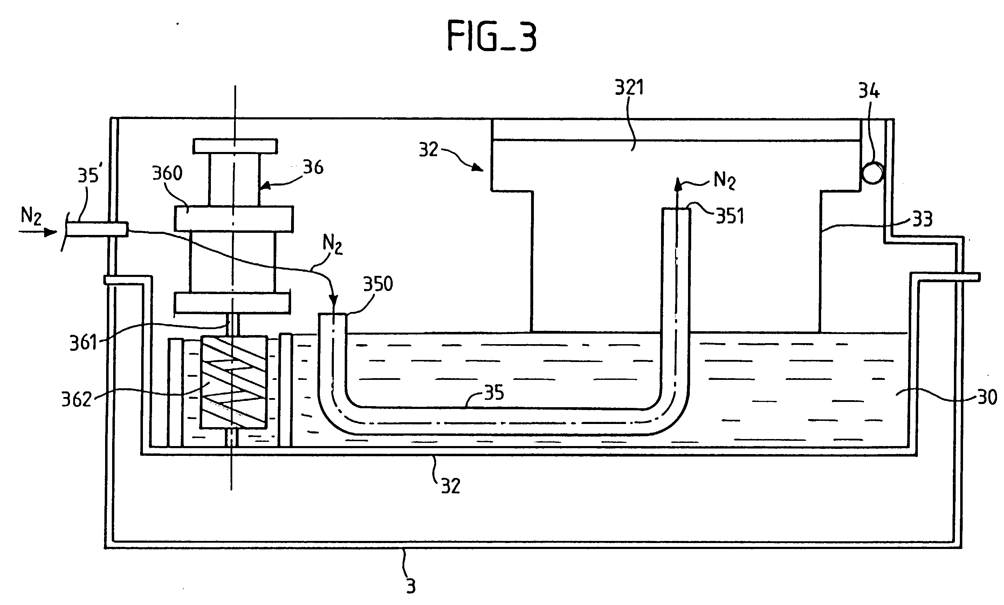

La figure 3 illustre, en coupe transversale, un tel mode de réalisation préféré de l'invention. Les éléments communs aux figures précédentes portent les mêmes références et ne seront redécrits qu'en tant que de besoin. L'azote est injecté dans le sous-ensemble de soudage à la vague 3 par un conduit 35' débouchant dans l'enceinte constituant ce sous-ensemble 3. Celle-ci comprend, comme il est bien connu, outre les éléments précédemment décrits, un ensemble motorisé 36 de création de la vague Vₐ comportant un corps de pompe 360 entraîné par un moteur (non représenté) et couplé, via un axe 361, à une vis d'Archimède, par exemple. Le flux d'azote est soufflé sur la partie corps de pompe 360 et circule autour de sa structure externe, avant d'être réintroduit dans une extrémité 350 de la canalisation de préchauffage 35, extrémité 350 surplombant le bain de soudure en fusion 30. A partir de ce point, la conduite 35 est plongée dans ce bain et l'azote est préchauffé avant d'être insufflé dans la zone restreinte précitée Z_{S}. Cette disposition permet de refroidir le corps de pompe 360, pour le moins de le maintenir à une température acceptable, malgré la proximité du bain de soudure en fusion 30, bain porté à une température élevée (typiquement à 250 °C, comme il a été indiqué).

En fin, dans un mode de réalisation supplémentaire (non représenté), le débit d'azote pourrait être régulé ou asservi à certains paramètres physiques liés à la machine ou au processus de soudage (vitesse de défilement des cartes 5, nature du bain de soudure, etc.). Ce débit pourrait être piloté, notamment, par un microprocesseur recevant des informations numérisées en provenance de capteurs classiques implantés dans la machine (mesure de la température du bain 30, de la vitesse de défilement des cartes 5, etc..) et représentant les paramètres physiques précités. De façon classique également, ce microprocesseur délivrerait des signaux de commande, élaborés à partir des données d'entrées (les informations numérisées précitées), conformément à un programme préétabli, et transmises à un organe de régulation du débit d'azote (vanne commandable, par exemple).

Pour fixer les idées, une machine de soudure à la vague, de type industriel, a une longueur de l'ordre de plusieurs mètres et une largeur typique de l'ordre du mètre.

On constate aisément, à la lecture de la description qui précède que l'invention atteint bien les buts qu'elle s'est fixés.

Comme dans le cas des systèmes de l'art connu mettant en oeuvre de l'azote, la tension superficielle est augmentée et l'oxydation évitée. Cependant, le procédé est plus efficace car l'azote est injecté dans une zone précise, en cours de soudure. L'injection étant en outre piloté par un système flottant (capot 33), selon la caractéristique principale de l'invention, le gaz est dirigé précisément et correctement sur la cible, quelle que soit la hauteur de la vague Vₐ. Dans la variante de réalisation préférée, il est préchauffé, donc les risques de contraintes thermiques, notamment, sont minimisés. Il a été en outre constaté que les risques de pontages entre connexions adjacentes, donc de courts-circuits, sont minimisés et plus faibles que dans les systèmes classiques mettant en oeuvre de l'azote (remplissage complet de l'enceinte). La quantité d'azote nécessaire est également minimisée, puisque le débit nécessaire est très faible. Il n'est donc pas nécessaire de disposer d'un réservoir d'azote important et les risques de pollution de l'environnement en sont d'autant réduits.

Enfin, le dispositif conforme à l'invention peut être implanté aisément dans une machine de soudure à la vague, sans qu'il soit nécessaire d'en revoir la conception globale ou de la modifier profondément. Ceci peut être réalisé sous forme de "kit" standard ou d'une implantation personnalisée.

Il doit être clair cependant que l'invention n'est pas limitée aux seuls exemples de réalisations précisément décrits, notamment en relation avec les figures 2 à 3. Notamment, les grandeurs physiques (températures, dimensions, etc.) et les compositions de matériau n'ont été données que pour mieux fixer les idées. Elles sont dépendantes de l'application précise envisagée et ne procèdent que d'un choix de nature technologique, à la portée de l'Homme de Métier.

## Revendications

1. Dispositif d'injection d'un gaz neutre (N₂) pour machine de soudure à la vague (Vₐ) du type comprenant au moins un convoyeur (4) d'éléments à souder (5) et un bac (37) contenant un alliage (30) de matériaux de soudure en fusion, des moyens de production de la vague (Vₐ) mettant ledit alliage (30) en mouvement et une buse (32) conduisant cet alliage vers ledit élément à souder (5) et le projetant sous la forme d'une vague (Vₐ), ladite buse (32) comportant un réservoir supérieur (321), dans lequel se déverse au moins une partie du matériau constituant ladite vague (Vₐ), le dispositif comprenant en outre un élément déflecteur (33), caractérisé en ce que ledit élément déflecteur (33) flotte sur le matériau (30') contenu dans le réservoir supérieur (321), de manière à ce qu'il suive le niveau atteint par la vague (Vₐ), et en ce qu'il est prévu des moyens (35) pour injecter ledit gaz neutre (N₂) entre l'élément déflecteur flottant (33) et le matériau (30') contenu dans le réservoir supérieur (321), de manière à insuffler ledit gaz neutre (N₂) sur une zone prédéterminée (Z_{S}) dudit élément à souder (5).

2. Dispositif selon la revendication 1, caractérisé en ce que les éléments à souder sont des cartes de circuits imprimés (5), en ce que ledit convoyeur (4) les présente à la vague de soudure (Vₐ) sous un angle de faible amplitude (α), le bord avant de ces cartes (5), dans le sens du transport (fₜ), étant plus élevé que le bord arrière, et en ce que ladite zone prédéterminée (Z_{S}) est délimitée, sur l'arrière, par la jonction de ladite vague (Vₐ) avec la carte de circuits imprimé (5) et, sur l'avant, par le bord dudit déflecteur (33) en vis à vis avec la carte de circuits imprimés (5).

3. Dispositif selon la revendication 2, caractérisé en ce que ledit déflecteur flottant (33) constitue un capot recouvrant au moins partiellement ledit bac (37) contenant l'alliage en fusion (30) et ledit réservoir supérieur (33), en ce que le déflecteur flottant (33) est muni d'un flotteur (330), pour assurer ledit suivi de niveau, et de joints (34) assurant une étanchéité entre l'intérieur du dispositif (3) et le milieu extérieur (A_{b}).

4. Dispositif selon l'une quelconque des revendications précédentes, caractérisé en ce que lesdits moyens d'injection du gaz neutre (N₂) comprennent un conduit (35) en partie immergé dans l'alliage en fusion (30) contenu dans ledit bac (37), de manière à préchauffer le gaz (N₂).

5. Dispositif selon la revendication 4, caractérisé en ce que ledit conduit est un serpentin (35).

6. Dispositif selon l'une quelconque des revendications précédentes, caractérisé en ce que, la vague (Vₐ) étant produite par un moteur entraînant une pompe (360-362), ledit gaz neutre (N₂) est insufflé (35') sur le corps (360) de cette pompe avant préchauffage, de manière à le refroidir, le gaz neutre (N₂) étant ensuite capté par lesdits moyens d'injection.

7. Dispositif selon l'une quelconque des revendications précédentes, caractérisé en ce que ledit gaz neutre est de l'azote (N₂).

8. Dispositif selon l'une quelconque des revendications précédentes, caractérisé en ce que ledit alliage de matériaux de soudure est un alliage étain-plomb porté à une température de 250 °C et en ce que ledit gaz neutre (N₂) est préchauffé à une température de 200 °C.

9. Dispositif selon l'une quelconque des revendications précédentes, caractérisé en ce que le débit dudit gaz neutre (N₂) est régulé en fonction de paramètres physique liés à la machine et/ou au procédé de soudage.

10. Machine à souder caractérisé en ce qu'elle comporte un dispositif selon l'une quelconque des revendications précédentes.
